# EUROPÄISCHE PATENTSCHRIFT

(11) **EP 2 709 221 B1**
(45) Veröffentlichungstag und Bekanntmachung des Hinweises auf die Patenterteilung: **16.08.2017**
(21) Anmeldenummer: 12184586.1
(22) Anmeldetag: 14.09.2012
(51) Int. Cl.: H02G 3/04

(54) **KABELBAHN**
CABLE TRACK
BANDE DE CÂBLE

(43) Veröffentlichungstag der Anmeldung: 19.03.2014
(73) Patentinhaber: Zurecon AG, 8003 Zürich (CH)
(72) Erfinder: Pfluger, Gerd, 4625 Oberbuchsiten (CH)
(74) Vertreter: Rutz & Partner

(56) Entgegenhaltungen:
- EP-A1- 2 369 705
- DE-C1- 19 740 833
- FR-A1- 2 972 235
- KR-B1- 100 916 945
- NL-A- 7 807 268

## Beschreibung

Die Erfindung betrifft eine Kabelbahn nach dem Oberbegriff des Patentanspruchs 1.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität in metallenen Kabelbahnen gelegt und so beispielsweise von einem Schaltfeld oder einer Zentrale zu den Verbrauchern geführt. Kabelbahnen dieser Art sind beispielsweise aus dem [1] Produktkatalog der LANZ OENSINGEN AG, Juni 2009, bekannt.

Die in [1] z.B. auf Seite 44 gezeigten Kabelbahnen weisen zwei durch ein Bodenteil miteinander verbundene Seitenwände auf und sind typischerweise mit Längsöffnungen versehen, die insbesondere der Belüftung dienen, sowie Wasser nach aussen ableiten. Die Kabelbahnen sind üblicherweise in regelmässigen Abständen auf Ausleger abgestützt, die an einer Wand oder einer Deckenstütze montiert sind.

Kabelbahnen sollen daher verschiedene Funktionen erfüllen. Einerseits sollen Kabelbahnen eine hohe Stabilität aufweisen, so dass möglichst viel und schweres Kabelmaterial getragen werden kann, ohne dass Deformationen auftreten. Das Kabelmaterial soll trocken gehalten und gut belüftet werden, so dass Wärmeenergie abgeführt werden kann. Weiterhin sollen Kabelbahnen kostengünstig herstellbar, vorteilhaft transportierbar und mit geringem Aufwand montierbar sein. Dazu sollen Kabelbahnen möglichst wenig Gewicht und somit möglichst wenig Material aufweisen. Durch die Reduktion des eingesetzten Materials reduzieren sich jedoch nicht nur das Gewicht und die Herstellungskosten, sondern auch die Festigkeit der Kabelbahnen. Zur Vermeidung des Durchbiegens der Kabelbahnen sind daher die Ausleger, welche die Kabelbahn abstützen, näher beieinander anzuordnen. Dies verursacht wiederum einen erhöhten Montageaufwand. Der Ingenieur ist bei der Dimensionierung von Kabelbahnen daher erheblichen Sachzwängen unterworfen, weshalb Materialreduktionen bei der Fertigung der Kabelbahn nur erzielt werden können, wenn anderweitige Nachteile in Kauf genommen werden. Ebenso können längere Kabelbahnen, welche grössere Abstände zwischen den Stützstellen überbrücken, nur dann realisiert werden, wenn die Festigkeit der Kabelbahn durch Wahl einer grösseren Wanddicke erhöht wird.

Aus der KR100916945B1 ist eine Kabelbahn nach dem Oberbegriff des Anspruchs 1 bekannt, bei der der Boden und die Seitenwände mit Verformungen versehen sind, mittels denen die Festigkeit der Kabelbahn erhöht wird. Ferner ist eine Trennwand mit dem Boden der Kabelbahn verbindbar.

Aus der DE19740833C1 ist eine Kabelbahn bekannt, bei der Kabelbahnboden einen durch Doppelfaltung gebildeten Versteigungssteg aufweist, welcher der Kabelbahn eine erhöhte Stabilität verleiht.

Aus der FR2972235 ist eine Kabelbahn bekannt, die mit L-Profilen versehen wird, die der Kabeltrennung dienen. Die L-Profile sind lösbar von Verbindungsvorrichtungen gehalten, die in den Kabelbahnboden eingesetzt sind.

Die NL7807268A offenbart eine Kabelbahn, in die ein gefaltetes Trennelement einsetzbar ist, das zwei miteinander verbundene Seitenplatten aufweist, die einseitig je eine nach aussen gerichtete Fussplatte aufweisen. Durch Zusammendrücken der Seitenplatten können die Fussplatten zwischen Hakenelemente einer Haltevorrichtung eingeführt und eingehängt werden, die ihrerseits mittels Haken mit dem Kabelbahnboden gekoppelt ist.

Die EP2369705A1 offenbart eine Kabelbahn mit einem ersten Abschnitt, bei dem die Wände mit einer rohrförmigen Verstärkung versehen sind, und mit einem zweiten Abschnitt, der eine Steckkupplung bildet.

Der vorliegenden Erfindung liegt daher die Aufgabe zugrunde, eine verbesserte Kabelbahn zu schaffen.

Insbesondere ist eine Kabelbahn mit verbesserten Festigkeitseigenschaften zu schaffen, die mit geringem Materialaufwand hergestellt werden kann. Die Kabelbahn soll schweres Kabelmaterial tragen und relativ grosse Distanzen zwischen zwei Stützstellen überwinden können.

Dabei soll sichergestellt werden, dass auch im Bereich aneinander anstossender Kabelbahnen die sichere Kabelführung gewährleistet ist.

Die Kabelbahn soll zudem raumsparend gelagert und transportiert werden können.

Weiterhin soll die Kabelbahn flexibel an die Bedürfnisse der Anwender anpassbar sein.

Diese Aufgabe wird mit einer Kabelbahn gelöst, welcher die in Anspruch 1 angegebenen Merkmale aufweist. Vorteilhafte Ausgestaltungen der Erfindung sind in weiteren Ansprüchen angegeben.

Die aus Metall gefertigte Kabelbahn, die der Aufnahme von Leitungen dient, umfasst ein beidseits mit Seitenwänden versehenes Bodenteil, das Bodenöffnungen aufweist. Erfindungsgemäss ist das Bodenteil anhand von lösbaren Verbindungselementen mit einer Stabilisierungsvorrichtung verbunden, die wenigstens eine Stabilisierungsplatte umfasst, welche sich parallel zu den Seitenwänden vorzugsweise über die gesamte Länge der ein oder mehrteiligen Kabelbahn erstreckt.

Die erfindungsgemässe Kabelbahn kann daher mit und ohne Stabilisierungsvorrichtung eingesetzt werden. Sofern das Gewicht des Kabelmaterials gering ist oder die Kabelbahn in geringen Abständen abgestützt ist, kann auf den Einsatz der Stabilisierungsvorrichtung verzichtet werden. Die Kabelbahn kann in diesem Zustand auch raumsparend gestapelt, gelagert und transportiert werden. Sofern mittels der Kabelbahn hingegen schwereres Kabelmaterial getragen werden soll und/oder grössere Abstände zwischen den Stützstellen vorgesehen werden, so wird die Stabilisierungsvorrichtung eingesetzt, was mit wenigen Handgriffen vollzogen werden kann.

Sofern besonders grosse Lasten getragen werden sollen, so können auch zwei oder mehr Stabilisierungsvorrichtungen eingesetzt werden. Die Kabelbahn kann dadurch sogar vorteilhaft zu einem statischen Träger ausgebaut werden, der nebst Kabelmaterial auch andersartige Lasten tragen kann. Dazu wird die Kabelbahn vorzugsweise mit einer lösbar montierten Abdeckung versehen, so dass ein Rechteckprofil resultiert.

Mittels der Stabilisierungsvorrichtung, die wenigstens eine Stabilisierungsplatte umfasst, wird ein Durchbiegen der installierten Kabelbahn auch bei der Überbrückung grösserer Distanzen und der Einwirkung schwerer Lasten verhindert.

Die Kabelbahn ist modular aufgebaut und kann in separaten Teilen geliefert und vor Ort passend zusammengebaut werden. Die Kabelbahnen oder Kabelbahnsegmente können ineinander verschoben gestapelt werden. Die vorzugsweise identischen Stabilisierungsvorrichtungen können in vorzugsweisen Ausgestaltungen ebenfalls gestapelt und raumsparend gelagert und transportiert werden.

Die Stabilisierungsvorrichtung kann zusätzlich zum Verbinden benachbarter Kabelbahnen oder Kabelbahnsegmente eingesetzt werden. Dabei resultiert nicht nur eine stabile Verbindung, sondern auch ein stabilisierter Übergangsbereich zwischen benachbarten Kabelbahnsegmenten. Vorzugsweise werden die Kabelbahnsegmente und die Stabilisierungsplatte hälftig gegeneinander versetzt montiert. Dadurch resultieren zwei Vorteile. Einerseits wird die Festigkeit der Kabelbahnsegmente erhöht. Andererseits resultieren stabile Verbindungen zwischen den Kabelbahnsegmenten. Der modulare Aufbau der Kabelbahnen erlaubt auch die Lieferung von kürzeren Kabelbahnsegmenten, die am Installationsort auf eine passende Länge zusammengesetzt werden. Für Reparaturarbeiten oder Änderungen der Installation benötigt der Installateur daher keinen grösseren Lieferwagen, sondern kann relativ kurze Kabelbahnsegmente stapeln und vor Ort auf eine passende Länge zusammensetzen.

Damit die benachbarten Kabelbahnsegmente besonders einfach miteinander verbunden werden können, werden sie zuerst koaxial zueinander ausgerichtet und vorzugsweise mittels Verbindungselementen fixiert. Sofern die Enden der Seitenwände nach innen oder nach aussen gerollt sind, können die Verbindungselemente vorteilhaft in die Enden der Seitenwände eingeschoben werden, um die Kabelbahnsegmente in koaxialer Lage zu halten.

Aufgrund des Einsatzes der Stabilisierungsvorrichtung können Bodenteil und Seitenwände mit reduzierter Festigkeit, d.h. mit reduziertem Material gefertigt werden, weshalb mit der Materialreduktion auch eine Kostenreduktion resultiert. Besonders vorteilhaft ist auch, dass durch den Einsatz der Stabilisierungsvorrichtung keine Schwächung der Kabelbahn hinsichtlich weiterer Belastungen eintritt. Die Stabilisierungsvorrichtung verhindert das Durchbiegen der Kabelbahn entlang der Längsachse der Kabelbahn. Die Festigkeit bezüglich der Durchbiegung entlang der Querachse der Kabelbahn wird durch den Einsatz der Stabilisierungsvorrichtung insbesondere dann erhöht, wenn zwei oder mehr zusammenwirkende Stabilisierungsplatten voneinander beabstandet auf dem Bodenteil befestigt und an der Oberseite miteinander verbunden werden. In diesem Falle resultiert eine Stabilisierung nicht nur in Längsrichtung, sondern auch in Querrichtung.

Zur Stabilisierung in Querrichtung werden vorzugsweise quer zur Längsachse von einer zur anderen Seitenwand verlaufende Verstärkungselemente vorgesehen. Beispielsweise werden Quersicken in das Bodenteil eingeprägt. Damit diese Verstärkungselemente nicht unterbrochen werden, wird die Stabilisierungsvorrichtung bzw. die wenigstens eine Stabilisierungsplatte vorzugsweise mit Ausnehmungen versehen, die der Aufnahme der Quersicken dienen. Auf diese Weise gelingt es vorteilhaft, die Kabelbahn mittels der Stabilisierungsvorrichtung in Längsrichtung und mittels der Verstärkungselemente in Querrichtung zu stabilisieren.

Die Stabilisierungsvorrichtung, die eine oder mehrere Stabilisierungsplatten umfasst, kann mittels Schrauben oder schraubenlos mittels Haken mit dem Bodenteil der Kabelbahn verbunden werden. Die Stabilisierungsplatte kann zusammen mit einem oder mehreren Fusselementen zum Beispiel ein L- oder T-Profil oder mit zusätzlichen Kopfelementen ein Doppel-T-Profil bilden. Die Fusselemente werden auf das Bodenteil abgestützt und zum Beispiel mittels Schrauben damit verbunden.

Durch Falten der Oberseite der Stabilisierungsplatte um 180° kann deren Festigkeit deutlich erhöht werden, ohne zusätzliche Raum in Anspruch zu nehmen. Die Stabilisierungsplatte kann jedoch auch mehrfach abgewinkelt sein und ein beliebiges Profil einschliessen. Vorteilhaft kann die Stabilisierungsplatte ein nach unten geöffnetes U-Profil mit zwei Schenkeln bilden, die vorzugsweise beide mittels Schrauben oder Haken im Bodenteil der Kabelbahn verankert werden. Alternativ können die Schenkel wiederum mit Fusselementen versehen werden, welche mit dem Bodenteil verschraubt werden.

In einer vorzugsweisen Ausgestaltung wird die Stabilisierungsplatte an der Unterseite mit einer Serie von Haken versehen, die im selben Raster angeordnet sind, wie die Öffnungen im Bodenteil der Kabelbahn. Die Stabilisierungsplatte kann daher mit einem Handgriff mit dem Bodenteil der Kabelbahn gekoppelt werden. Die Haken können dabei in Längsrichtung oder Querrichtung ausgerichtet sein. Sofern zwei zusammenwirkende Stabilisierungsplatten verwendet werden, so ragen die Haken, abgewandt von der benachbarten Stabilisierungsplatte, vorzugsweise quer nach aussen. Wenn die Oberseiten der beiden Stabilisierungsplatten gegeneinander gedrückt werden, so werden die Haken von unten gegen das Bodenteil gedreht, wodurch die beiden Stabilisierungsplatten verspannt werden und nur unter Krafteinwirkung weiter gegeneinander gedrückt werden können. An der Oberseite weisen die Stabilisierungsplatten vorzugsweise abgewinkelte Flanschelemente auf, die in der Endlage übereinander liegen. Eine Verbindung zwischen diesen beiden Flanschelementen kann dabei besonders einfach durch Rasterelemente bewirkt werden. Beispielsweise sind aus den Flanschelementen alternierend Öffnungen und Haken ausgeschnitten, die ineinander eingreifen, sobald die Flanschelemente übereinander geschoben werden. Die beiden zusammenwirkenden Stabilisierungsplatten können identisch ausgestaltet werden, weshalb ein minimaler Herstellungsaufwand resultiert. Ferner können die Stabilisierungsplatten aneinander liegend gestapelt werden.

Die beiden Stabilisierungsplatten sind vorzugsweise derart ausgestaltet und montiert, dass sie einen Sonderkanal einschliessen, der gegen mechanische, magnetische und elektrische Einwirkungen abschirmt und insbesondere zur Aufnahme und zum Schutz elektrischer und optischer Datenleitungen optimal geeignet ist. Die beiden Stabilisierungsplatten können auseinander geschwenkt werden, um die empfindlichen Datenleitungen einzulegen. Anschliessend werden die Stabilisierungsplatten gegeneinander gedreht, bis die Flanschplatten an der Oberseite übereinander liegen und gegenseitig einrasten.

Nachfolgend wird die Erfindung anhand von Zeichnungen näher erläutert. Dabei zeigt:
- Fig. 1a: eine erste erfindungsgemässe Kabelbahn 1A mit einem Bodenteil 12 und zwei daran anschliessenden Seitenwänden 11, die einen nach oben geöffneten Kanal begrenzen, in den eine Stabilisierungsvorrichtung 2A eingesetzt wird;
- Fig. 1b: die Kabelbahn 1A von Figur 1 mit der eingesetzten ersten Stabilisierungsvorrichtung 2A und einer
- Fig. 2a: zweiten Stabilisierungsvorrichtung 2A, die ebenfalls eingesetzt werden kann; eine zweite erfindungsgemässe Kabelbahn 1B, die aus mehreren Kabelbahnsegmenten 1Bm 1Bn zusammengesetzt ist und in die eine zweiteilige Stabilisierungsvorrichtung 2B eingesetzt ist, welche einerseits die Kabelbahn 1B stabilisiert und andererseits die Kabelbahnsegmente 1Bm, 1Bn, zusammenhält;
- Fig. 2b: einen Schnitt durch die zweite Kabelbahn 1B entlang der in Figur 2a eingezeichneten Schnittlinie; und
- Fig. 2c: die zweite Kabelbahn 1B mit den beiden voneinander gelösten Teilen 21, 22 der Stabilisierungsvorrichtung 2B von Figur 2a.

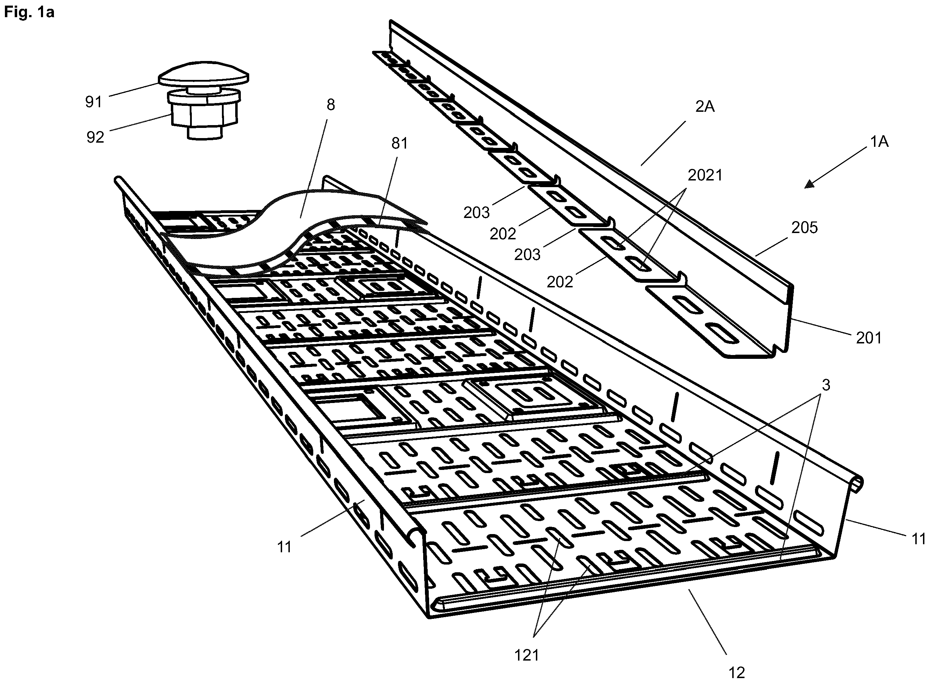

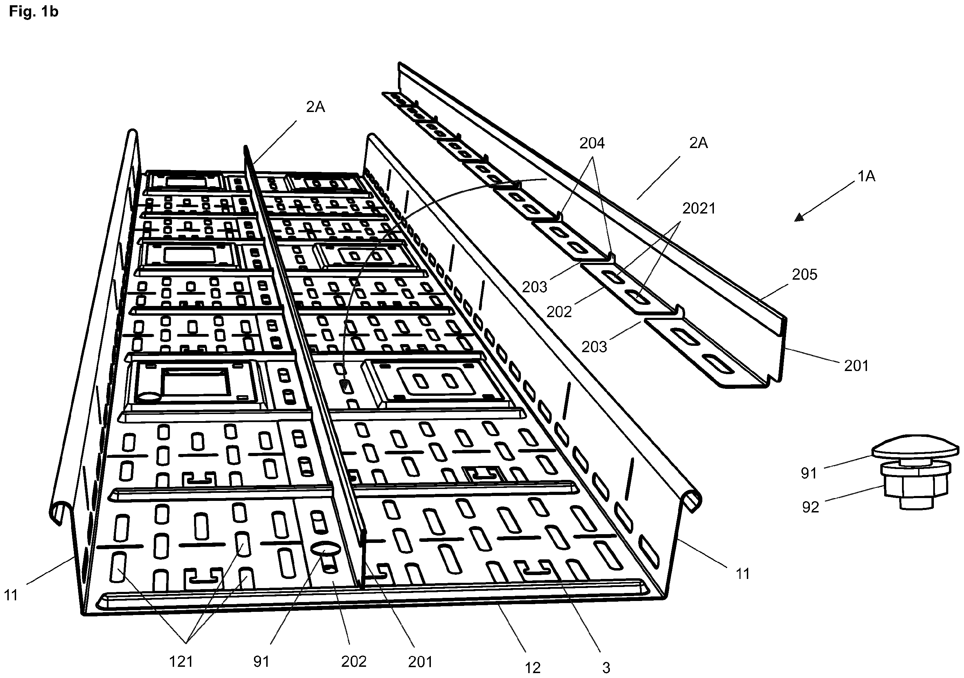

Figur 1 zeigt eine erste erfindungsgemässe Kabelbahn 1A mit einem Bodenteil 12 und zwei daran anschliessenden Seitenwänden 11, die einen nach oben geöffneten Kanal begrenzen. Ferner ist eine Stabilisierungsvorrichtung 2A gezeigt, die in die Kabelbahn 1A einsetzbar ist und eine Stabilisierungsplatte 201 umfasst, mittels der die Kabelbahn 1A stabilisiert werden kann. An der Unterseite der Stabilisierungsplatte 201 sind Fusselemente 202 vorgesehen, die mit Montageöffnungen 2021 versehen sind. Die Stabilisierungsplatte 201 und die Fusselemente 202 bilden zusammen ein L-Profil, welches durch Verbindungselemente 91, 92 in einfacher Weise mit dem Bodenteil 12 verbunden werden kann, welches Bodenöffnungen 121 aufweist. Dazu werden Montagebolzen 91 durch die Montageöffnungen 2021 in den Fusselementen 202 der Stabilisierungsvorrichtung 2A und durch die Bodenöffnungen 121 im Bodenteil 12 hindurch geführt und mit Schraubenmuttern 92 derart verbunden, dass die Fusselemente 202 gegen das Bodenteil 12 angepresst werden. Die Stabilisierungsplatte 201 ist in der Folge senkrecht zum Bodenteil 12 ausgerichtet und verhindert ein Durchbiegen des Bodenteils 12 unter Last. Die Kabelbahn 1A kann bei gleicher Dimensionierung daher deutlich mehr Last aufnehmen oder bei gleicher Last weniger massiv ausgebildet werden.

Wie dies in Figur 1a gezeigt ist, kann die Kabelbahn 1A wahlweise mit oder ohne Stabilisierungsvorrichtung 2A eingesetzt werden. Sofern nur leichte Lasten zu tragen oder kurze Abstände zwischen Stützelementen zu überbrücken sind, kann auf den Einbau der Stabilisierungsvorrichtung 2A verzichtet werden. Die Kabelbahn 1A kann daher vorteilhaft ohne installierte Stabilisierungsvorrichtung 2A gestapelt, gelagert und geliefert werden. In der Folge wird die Stabilisierungsvorrichtung 2A bedarfsweise am Installationsort in die Kabelbahn 1A eingebaut. Stabilisierungsvorrichtungen 2A sind vorzugsweise ebenfalls derart ausgestaltet, dass sie gestapelt und für den Transport gebündelt werden können. Auf diese Weise reduziert sich der Raumbedarf in einem Lager oder in einem Transportfahrzeug erheblich.

Für eine weitere Stabilisierung der Kabelbahn 1A können auch zwei oder mehrere Stabilisierungsvorrichtungen 2A in die Kabelbahn 1A eingesetzt werden. Auf diese Weise kann die Kabelbahn 1A sogar zu einem Träger ausgebaut werden, welcher entsprechend hoch belastbar ist. Innerhalb der Infrastruktur eines Gebäudes kann die entsprechend stabilisierte Kabelbahn 1A, nicht nur zur Führung von Kabel, sondern z.B. auch als begehbare Brücke verwendet werden, wozu eine Abdeckung 8 auf die Kabelbahn 1A aufgesetzt wird. Die Stabilisierungsplatten 201 sind dabei derart bemessen, dass die Abdeckung spielfrei gehalten ist. In einer besonders bevorzugten Ausgestaltung ist an der Unterseite der Abdeckung 8 eine hartelastische Schicht vorgesehen, welche unter Last komprimierbar ist. Mittels der hartelastischen Schicht, die optional einsetzbar ist, erfolgt ein Lastausgleich zwischen den Stabilisierungsplatten 201. Die Kabelbahn 1A kann daher eine Doppelfunktion aufweisen und einerseits der Führung von Kabel 6 und andererseits als begehbarer statischer Träger dienen. Die Stabilisierungsplatten 201 können in vorzugsweisen Ausgestaltungen auch ein T-Profil oder Doppel-T-Profil aufweisen, welches der Kabelbahn 1A eine zusätzlich erhöhte Stabilität verleiht.

Zur Verstärkung der Stabilisierungsplatte 201 wird deren oberes Ende 205, welches die Form einer Platte aufweist, vorzugsweise um 180° gefaltet. Eine Verbiegung der Stabilisierungsplatten 201 und der Kabelbahn 1A unter Last, insbesondere auch unter Einwirkung von Last auf die Abdeckung 8, kann daher auch bei hoher Beanspruchung vermieden werden.

In der gezeigten vorzugsweisen Ausgestaltung sind quer zu den Seitenwänden 11 verlaufende Verstärkungselemente 3 in das Bodenteil 12 eingeprägt. Durch diese Verstärkungselemente 3, die vorzugsweise durchgehend von der ersten zur zweiten Seitenwand 11 verlaufen, erfolgt eine laterale Stabilisierung der Kabelbahn 1A. D.h., es wird verhindert, dass sich die Kabelbahn 1A um die Längsachse verbiegen kann. Um die Koexistenz der von der ersten zur zweiten Seitenwand 11 quer verlaufenden Verstärkungselemente 3 sowie der Stabilisierungsvorrichtung 2A innerhalb der Kabelbahn zu ermöglichen, ist die Stabilisierungsplatte 201 an der Unterseite mit Ausnehmungen 204 versehen, in die die Verstärkungselemente 3 hinein ragen können. Mittels der Stabilisierungsplatte 201 und der Verstärkungselemente 3 wird somit eine Stabilisierung der Kabelbahn 1A sowohl in Längsrichtung als auch in Querrichtung erzielt.

Figur 1b zeigt die Kabelbahn 1A von Figur 1 mit der eingesetzten ersten Stabilisierungsvorrichtung 2A und einer zweiten Stabilisierungsvorrichtung 2A, die ebenfalls eingesetzt und mittels Bolzen 91 und Schraubenmuttern 92 befestigt werden kann. Wie dies gezeigt ist, können zwei (oder auch mehr) Stabilisierungsvorrichtungen 2A zum Beispiel in der Mitte der Kabelbahn 1A montiert werden, die das Bodenteil 12 versteifen. Zwischen den voneinander beanstandeten Stabilisierungsvorrichtungen 2A resultiert ein Sonderkanal, in den besonders empfindliche Kabel, zum Beispiel Netzwerkkabel, eingelegt werden können.

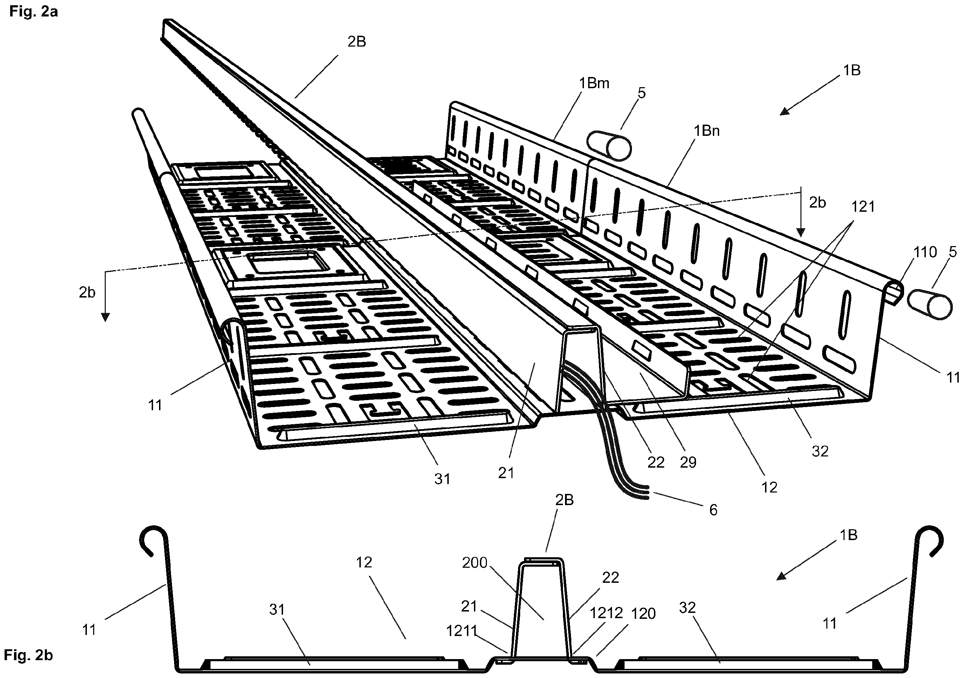

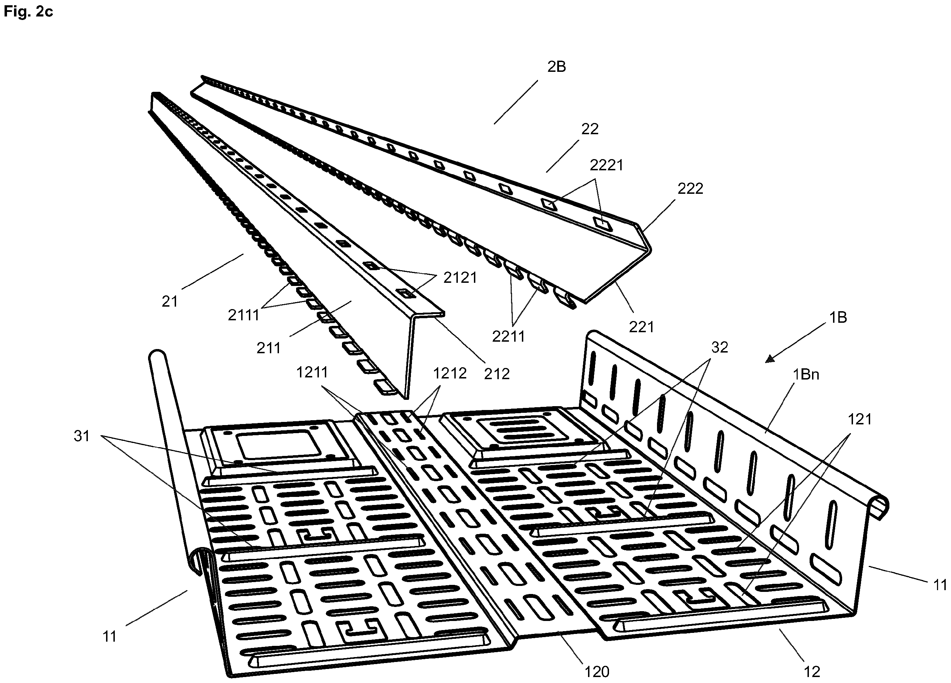

Die Figuren 2a, 2b und 2c zeigen eine zweite erfindungsgemässe Kabelbahn 1B, die aus mehreren Kabelbahnsegmenten 1Bm 1Bn zusammengesetzt ist. In die Kabelbahn 1B ist eine aus zwei Teilen 21, 22 zusammengesetzte Stabilisierungsvorrichtung 2B eingesetzt, welche einerseits die Kabelbahn 1B stabilisiert und andererseits die Kabelbahnsegmente 1Bm, 1Bn, ... zusammenhält.

Jedes der beiden Teile 21, 22 der Stabilisierungsvorrichtung 2B umfasst eine Stabilisierungsplatte 211 bzw. 221, die an der Unterseite mit einer Serie von Haken 2111 bzw. 2211 versehen ist. Mittels der Haken 2111 bzw. 2211 können die beiden Stabilisierungsplatten 211 bzw. 221 im Bodenteil 12 verankert werden. Dazu sind die Haken 2111 bzw. 2211 im gleichen Rasterabstand wie die zugehörigen Bodenöffnungen 121; 1211; 1212 angeordnet. Die Stabilisierungsplatten 211 bzw. 221 können daher an verschiedenen Positionen auf dem Bodenteil 12, an denen Serien von Bodenöffnungen 121; 1211; 1212 vorgesehen sind, wahlweise verankert werden.

An der Oberseite sind die Stabilisierungsplatten 21, 22 mit gegeneinander abgewinkelten Flanschelementen 212, 222 versehen, die nach der Installation der beiden Stabilisierungsplatten 21, 22 aneinander anliegen. An den Flanschelementen 212, 222 sind Kopplungselemente 2121, 2221 vorgesehen, die ineinander einrasten können. Vorzugsweise sind Flügelelemente aus den Flanschelementen 212, 222 ausgeschnitten und nach unten gedrückt, so dass für jedes Flügelelement eine Flügelöffnung freigelegt wird. Die Flügelelemente und die Flügelöffnungen bilden dabei die Rastelemente, wobei die Flügelelemente des oberen Flanschelements 222 in die Flügelöffnungen des unteren Flanschelements 212 eingreifen können. Beim Zusammenschieben der Flanschelemente 212, 222 rasten die Flügelelemente des oberen Flanschelement 222 daher automatisch in die Flügelöffnungen des unteren Flanschelements 212 ein. Durch Anheben des oberen Flanschelements 222 kann diese Verbindung wieder gelöst werden.

Wie dies beispielsweise aus Figur 2c ersichtlich ist, können die beiden Stabilisierungsplatten 21, 22 identisch ausgestaltet werden, so dass sich der Herstellungsaufwand reduziert. Aufgrund der Identität der Stabilisierungsplatten 21, 22 können diese auch raumsparend gestapelt werden.

In der vorliegenden Ausgestaltung der Kabelbahn 1 wird die Stabilisierungsvorrichtung 2B in der Mitte des Bodenteils 12 auf einem in das Bodenteil 12 eingeprägten Sockel 120 befestigt, in dem zwei Serien von Bodenöffnungen 1211 und 1212 vorgesehen sind.

Auf dem Bodenteil 12 ist ferner eine Platte 29 befestigt, die beispielsweise der Aufnahme von Sonderzubehör dient.

Aus Figur 2a ist ferner ersichtlich, dass die beiden Stabilisierungsplatten 21, 22 einen Sonderkanal 200 einschliessen, der insbesondere der Aufnahme elektrischer und optischer Datenleitungen 6 dient. Die den Sonderkanal 200 begrenzenden Stabilisierungsplatten 21, 22 sowie das Bodenteil 12 dienen als Abschirmung gegen mechanische, magnetische und elektrische Einwirkungen. Innerhalb des Sonderkanals 200 sind empfindliche Datenleitungen 6 daher besonders gut geschützt. Durch Lösen der beiden Flanschplatten 212, 222 voneinander kann der Sonderkanal 200 geöffnet werden, um Datenleitungen 6 einzulegen oder zu entnehmen. Auch in dieser Ausgestaltung kann die Stabilisierungsvorrichtung 2B vorteilhaft zum Abstützen einer Abdeckung 8 verwendet werden.

Wie erwähnt, können mittels der Stabilisierungsvorrichtungen 2A und 2B mehrere Kabelbahnsegmente 1Bn, 1Bm, ... miteinander verbunden werden. Vorzugsweise werden Verbindungselemente 5 vorgesehen, mittels denen die Kabelbahnsegmente 1Bn, 1Bm, ... koaxial zueinander ausgerichtet werden können. In der Folge kann die Stabilisierungsvorrichtung 2A oder 2B einfacher montiert bzw. eingesetzt werden.

Vorzugsweise werden Kabelbahnsegmente 1Bn, 1Bm, ... mit Seitenwänden 11 verwendet, deren obere Enden 111 nach innen oder aussen gerollt sind und daher Verbindungselemente 5 aufnehmen können, die zwei koaxial zueinander ausgerichtete Kabelbahnsegmente 1Bn, 1Bm fixieren.

Figur 2b zeigt einen Schnitt durch die zweite Kabelbahn 1B entlang der in Figur 2a eingezeichneten Schnittlinie.

Figur 2c zeigt die zweite Kabelbahn 1B mit den beiden voneinander gelösten Teilen 21, 22 der Stabilisierungsvorrichtung 2B von Figur 2a.

## Patentansprüche

1. Kabelbahn (1B) aus Metall zur Aufnahme von Leitungen (6) umfassend ein beidseits mit Seitenwänden (11) versehenes Bodenteil (12), das Bodenöffnungen (121, 1211, 1212) aufweist, **dadurch gekennzeichnet, dass** das Bodenteil (12) anhand von voneinander lösbaren Verbindungselementen (2111, 2211) mit einer Stabilisierungsvorrichtung (2B) verbunden ist, die wenigstens eine Stabilisierungsplatte (21, 22) umfasst, welche sich parallel zu den Seitenwänden (11) vorzugsweise über die gesamte Länge der Kabelbahn (1A, 1B) erstreckt und dass die wenigstens eine Stabilisierungsplatte (21, 22) an der Unterseite mit einer Serie von hakenförmigen Verbindungselementen (2111, 2211) versehen ist, die in die Bodenöffnungen (121, 1211, 1212) eingreifen und die im selben Rasterabstand wie die Bodenöffnungen (121, 1211, 1212) angeordnet sind.

2. Kabelbahn (1B) nach Anspruch 1, **dadurch gekennzeichnet, dass** die Stabilisierungsvorrichtung (2B) zwei Stabilisierungsplatten (21, 22) umfasst, die an der Oberseite durch zueinander korrespondierende Kopplungselemente (2121, 2221) miteinander lösbar verbunden sind.

3. Kabelbahn (1B) nach Anspruch 2, **dadurch gekennzeichnet, dass** die beiden Stabilisierungsplatten (21, 22) an der Oberseite gegeneinander abgewinkelte Flanschelemente (212, 222) aufweisen, die aneinander anliegen.

4. Kabelbahn (1B) nach Anspruch 2 oder 3, **dadurch gekennzeichnet, dass** die beiden Stabilisierungsplatten (21, 22), gegebenenfalls vorbehaltlich der Kopplungselemente (2121, 2221), identisch ausgestaltet sind.

5. Kabelbahn (1B) nach Anspruch 3 oder 4, **dadurch gekennzeichnet, dass** die Kopplungselemente (2121, 2221) an den Flanschelementen (212, 222) ineinander greifende Rastelemente sind.

6. Kabelbahn (1B) nach einem der Ansprüche 1 - 5, **dadurch gekennzeichnet, dass** die beiden Stabilisierungsplatten (21, 22) einen Sonderkanal (200) einschliessen, der insbesondere der Aufnahme elektrischer und optischer Datenleitungen (6) dient.

7. Kabelbahn (1B) nach einem der Ansprüche 1 - 6, **dadurch gekennzeichnet, dass** in das Bodenteil (12) quer zu den Seitenwänden (11) verlaufende Verstärkungselemente (3; 31, 32) eingeprägt sind und dass die wenigstens eine Stabilisierungsplatte (21, 22) an der Unterseite Ausnehmungen (204) aufweist, in die die vorzugsweise von der ersten zur zweiten Seitenwand (11) verlaufenden Verstärkungselemente (3; 31, 32) hinein ragen.

8. Kabelbahn (1B) nach einem der Ansprüche 1 - 7, **dadurch gekennzeichnet, dass** die wenigstens eine Stabilisierungsplatte (201) an der Oberseite (205) um 180° gefaltet ist.

9. Kabelbahn (1B) nach einem der Ansprüche 1 - 8, **dadurch gekennzeichnet, dass** die Kabelbahn (1B) aus mehreren Kabelbahnsegmenten (1Bn, 1Bm) besteht, die mittels der Stabilisierungsplatte (21, 22) miteinander verbunden sind.

10. Kabelbahn (1B) nach Anspruch 9, **dadurch gekennzeichnet, dass** die Kabelbahnsegmente (1Bn, 1Bm) anhand von Verbindungselementen (5) koaxial zueinander ausgerichtet sind.

11. Kabelbahn (1B) nach Anspruch 10, **dadurch gekennzeichnet, dass** die oberen Enden (111) der Seitenwände (11) nach innen oder aussen gerollt sind und der Aufnahme der Verbindungselemente (5) dienen.

12. Kabelbahn (1B) nach einem der Ansprüche 1 - 11, **dadurch gekennzeichnet, dass** die wenigstens eine Stabilisierungsplatte (21) einfach oder mehrfach gebogen und vorzugsweise mit beiden Enden mit dem Bodenteil (12) verbunden ist.

13. Kabelbahn (1B) nach einem der Ansprüche 1 - 12, **dadurch gekennzeichnet, dass** auf die Kabelbahn (1B) eine Abdeckung (8) aufgesetzt ist, die vorzugsweise mit den oberen Enden (110) beider Seitenwände (11) lösbar verbunden ist.

## Claims

1. Cable tray (1B) made from metal for receiving conducting lines (6) comprising a bottom member (12) that is provided on both sides with sidewalls (11) and that comprises bottom openings (121, 1211, 1212), **characterised in that** the bottom member (12) by means of connecting elements (2111, 2211) that are releasable from one another is connected to a stabilising device (2B), which comprises at least one stabilising plate (21, 22) that extends in parallel to the sidewalls (11) preferably over the complete length of the cable tray (1A, 1B) and that the at least one stabilising plate (21, 22) at the lower side is provided with a series of hook shaped connecting elements (2111, 2211), which engage into the bottom openings (121, 1211, 1212) and which are arranged in the same grid spacing as the bottom openings (121, 1211, 1212).

2. Cable tray (1B) according to claim 1, **characterised in that** the stabilising device (2B) comprises two stabilising plates (21, 22), which are releasably connected with one another at the upper side by coupling elements (2121, 2221), which correspond to one another.

3. Cable tray (1B) according to claim 2, **characterised in that** the tool stabilising plates (21, 22) at the upper side are provided with flange elements (212, 222) that are angled towards one another and abut one another.

4. Cable tray (1B) according to claim 2 or 3, **characterised in that** the two stabilising plates (21, 22), optionally except the coupling elements (2121, 2221), have an identical design.

5. Cable tray (1B) according to claim 3 or 4, **characterised in that** the coupling elements (2121, 2221) are latch elements that engage at the flange elements (212, 222) into one another.

6. Cable tray (1B) according to one of the claims 1 - 5, **characterised in that** the two stabilising plates (21, 22) enclose a special channel (200), which serves in particular for receiving electrical and optical data lines (6).

7. Cable tray (1B) according to one of the claims 1 - 6, **characterised in that** enforcing elements (3; 31, 32) extending inclined to the sidewalls (11) are embossed into the bottom member (12) and that the at least one stabilising plate (21, 22) at the lower side comprises recesses (204), into which the enforcing elements (3; 31, 32) extend, which preferably run from the first of the second sidewall (11).

8. Cable tray (1B) according to one of the claims 1 - 7, **characterised in that** the at least one stabilising plate (201) is folded by 180° at the upper side (205).

9. Cable tray (1B) according to one of the claims 1 - 8, **characterised in that** the cable tray (1B) consists of a plurality of cable tray segments (1Bn, 1Bm) that are connected with one of the by means of the stabilising plate (21, 22).

10. Cable tray (1B) according to claim 9, **characterised in that** the cable tray segments (1Bn, 1Bm) are aligned coaxially to one another by means of connecting elements (5).

11. Cable tray (1B) according to claim 10, **characterised in that** the upper ends (111) of the sidewalls (11) are rolled towards the inside or the outside and serve for receiving the connecting elements (5).

12. Cable tray (1B) according to one of the claims 1 - 11, **characterised in that** the at least one stabilising plate (21) is bent once or a plurality of times and is preferably connected with both ends to the bottom member (12).

13. Cable tray (1B) according to one of the claims 1 - 12, **characterised in that** on the cable tray (1B) a cover (8) is pleased, which preferably is releasably connected with the upper ends (110) of both sidewalls (11).

## Revendications

1. Chemin de câble (1B) en métal pour la réception de conducteurs (6) comprenant un élément de sol (12), qui présente des ouvertures dans le sol (121, 1211, 1212) et qui est muni de parois latérales (11) des deux côtés, **caractérisé en ce que** l'élément de sol (12) est connecté par des éléments de connexion (2111, 2211), qui sont séparables l'un de l'autre, à un dispositif de stabilisation (2B), qui comprend au moins une plaque de stabilisation (21, 22), qui s'étend parallèle aux parois latérales (11) de préférence sur toute la longueur du chemin de câble (1A, 1B) et que la au moins une plaque de stabilisation (21, 22) présente sur la face inférieure une série d'éléments de connexion (2111, 2211) en forme de crochets, qui interviennent dans les ouvertures dans le sol (121, 1211, 1212) et qui sont arrangés avec une distance de grille comme celle des ouvertures dans le sol (121, 1211, 1212).

2. Chemin de câble (1B) selon la revendication 1, **caractérisé en ce que** le dispositif de stabilisation (2B) présente deux plaques de stabilisation (21, 22), qui sont connecté ensemble de manière séparable sur la face supérieure par des éléments de couplage (2121, 2221) qui se correspondent mutuellement.

3. Chemin de câble (1B) selon la revendication 2, **caractérisé en ce que** les deux plaques de stabilisation (21, 22) présentent sur la face supérieure des éléments de bride (212, 222) anglés l'un par rapport à l'autre, qui sont appuyé l'un contre l'autre.

4. Chemin de câble (1B) selon la revendication 2 ou 3, **caractérisé en ce que** les deux plaques de stabilisation (21, 22) sont conçus de manière identiques, éventuellement sauf les éléments de couplage (2121, 2221).

5. Chemin de câble (1B) selon la revendication 3 ou 4, **caractérisé en ce que** les éléments de couplage (2121, 2221) sur les éléments de bride (212, 222) sont des éléments d'encliquetage qui s'engagent l'un dans l'autre.

6. Chemin de câble (1B) selon une des revendications 1 - 5, **caractérisé en ce que** les deux plaques de stabilisation (21, 22) enferment un canal spécial (200), qui est destiné en particulier à la réception de conducteur de donnés électriques ou optiques (6).

7. Chemin de câble (1B) selon une des revendications 1 - 6, **caractérisé en ce que** des éléments de renfort (3; 31, 32) orientés de manière transversale au parois latérales (11) sont créés dans l'élément de sol (12) et que la au moins une plaque de stabilisation (21, 22) présente des cavités (204) sur la face inférieure, dans lesquels entrent les éléments de renfort (3; 31, 32) qui s'étend de préférence de la première à la deuxième parois latérale (11).

8. Chemin de câble (1B) selon une des revendications 1 - 7, **caractérisé en ce que** la au moins une plaque de stabilisation (201) est plié de 180° sur la partie supérieure (205).

9. Chemin de câble (1B) selon une des revendications 1 - 8, **caractérisé en ce que** le chemin de câble (1B) présente plusieurs segments du chemin de câble (1Bn, 1Bm), qui sont connecté l'un à l'autre par la plaque de stabilisation (21, 22).

10. Chemin de câble (1B) selon la revendication 9, **caractérisé en ce que** les segments du chemin de câble (1Bn, 1Bm) sont orientés coaxialement l'un par rapport à l'autre par des éléments de connexion (5).

11. Chemin de câble (1B) selon la revendication 10, **caractérisé en ce que** les extrémités supérieures (111) des parois latérales (11) sont roulés vers l'intérieur ou vers l'extérieur et servent à la réception des éléments de connexion (5).

12. Chemin de câble (1B) selon une des revendications 1 - 11, **caractérisé en ce que** la au moins une plaque de stabilisation (21) est plié une fois ou plusieurs fois et est de préférence connecté avec les deux extrémités à l'élément de sol (12).

13. Chemin de câble (1B) selon une des revendications 1 - 12, **caractérisé en ce qu'**un couvercle (8) est posé sur le chemin de câble (1B), ledit couvercle (8) étant de préférence connecté de manière amovible aux extrémités supérieures (110) des parois latérales (11).
